# EUROPEAN PATENT SPECIFICATION

(11) **EP 2 576 672 B1**
(45) Date of publication and mention of the grant of the patent: **23.06.2021**
(21) Application number: 11723157.1
(22) Date of filing: 20.05.2011
(51) Int. Cl.: C08J 7/12, B29C 59/08, B29C 59/14

(54) **METHOD AND SYSTEM FOR TREATING FLEXIBLE FILMS**
VERFAHREN UND SYSTEM ZUR BEHANDLUNG FLEXIBLER FOLIEN
PROCÉDÉ ET SYSTÈME POUR LE TRAITEMENT DE FILMS SOUPLES

(30) Priority: 28.05.2010 US 789483
(43) Date of publication of application: 10.04.2013
(73) Proprietor: The Procter & Gamble Company, Cincinnati, OH 45202 (US)
(72) Inventor: KOHLWEYER, Christian, 91118 Bad Vilbel (DE)
(74) Representative: P&G Patent Germany
(86) International application number: PCT/US2011/037329
(87) International publication number: WO 2011/149777

(56) References cited:
- JP-A- 8 041 227
- US-A1- 2008 070 050
- US-A1- 2008 237 935
- US-A1- 2008 318 036

## Description

### FIELD OF THE INVENTION

The present invention relates to systems and methods for treating flexible LDPE films. The invention relates particularly to systems and methods for surface treating flexible LDPE films in preparation for subsequent film decorating activities.

### BACKGROUND OF THE INVENTION

Flexible films as packaging materials in the consumer products markets are well known. Decorating flexible films to exploit available package surface areas and to enable the communication of product information is also known. Product manufacturers and the manufacturers of product packaging materials seek to apply increasingly sophisticated decorating technologies to packing materials and packages to achieve a differentiated appearance for their products at the shelf and subsequent to the purchase of the product. Product manufacturers will also often desire to decorate films that are incorporated as part of a product, such as backsheet films in disposable personal hygiene absorbent products.

JP8041227A discloses a method for improving the surface of a polyimide film. The method comprises the following steps: allowing the polyimide film to travel at a constant line speed, subjecting the polyimide film to a flame treatment comprising pressing the film on a cooling roll and simultaneously blowing a flame on the film from a flame treatment nozzle in a flame treatment device, and subsequently introducing the treated film into a plasma treatment device for a plasma treatment.

US2008/237935A1 discloses a method for raising the surface tension of biaxially-stretched films made of thermoplastic polymers. A film is first treated on a surface by means of an atmospheric pressure plasma before being stretched transversally or simultaneously across the width thereof, and the film is additional a subjected to a second treatment by means of a corona or flame after being stretched transversally or simultaneously, the second treatment being done on the same surface which has already been plasma-treated.

US 2008/318036 A1 discloses a composition of a plastic layer on which a metal layer is deposited by vacuum evaporation. The plastic layer comprises a polypropylene and butene copolymer and is subjected to a preliminary surface activation treatment, preferably to a flame treatment, and to a subsequent plasma treatment under partial vacuum conditions prior to metallization.

US 2008/0070050 A1 discloses a metallized polymer films and method for preparing the same. Such films comprise at least one treated polymeric skin layer comprising butylene, and a metal layer deposited onto at least one surface of this polymeric skin layer. The polymeric skin layer is preferably preconditioned by subjecting an outermost surface thereof to plasma treatment which facilitates the deposition thereon of a strongly adhering metal layer which is preferably aluminum.

To be economically viable, packaging films must be processable via automated equipment in a reliable manner. This may require the film materials to be manufactured with low coefficient of friction surfaces to reliably proceed through the film decorating and converting equipment. Such surfaces may not be compatible with the increasingly sophisticated decorating techniques sought.

What is desired are systems and methods for treating flexible films to improve their compatibility with decorating technologies while retaining their compatibility with film converting equipment.

### SUMMARY OF THE INVENTION

Methods and systems for treating flexible films are provided according to claims 1, 3 and 6. In one embodiment the method for treating a flexible Low Density Polyethylene (LDPE) film, comprises the steps of: providing a flexible LDPE film having a fist side and a second side; flame treating the first side of the LDPE flexible film; and subsequently treating the first side with an Argon plasma, wherein the plasma treatment presents between 10.76 and 215.278 Watts/m²/min (between 1 and 20 Watts/ft(2)/min) to the film moving 200 m/min, and wherein the Argon plasma comprises 80% Argon (Ar) and 20% oxygen (O₂)..

In one embodiment, the method comprises steps of: providing a flexible LDPE film having a fist side and a second side; flame treating the first side of the flexible film; subsequently treating the first side with an Argon plasma, wherein the plasma treatment presents between 10.76 and 215.278 Watts/m²/min (between 1 and 20 Watts/ft(2)/min) to the film moving 200 m/min, and wherein the Argon plasma comprises 80% Argon (Ar) and 20% oxygen (O₂); applying a coating to the treated first side; and curing the coating applied to the first side.

In one embodiment, a system for treating a flexible film comprises:
an unwind element adapted to unwind a wound roll of flexible LDPE film, the flexible LDPE film having a first side and a second side;
a flame treatment element disposed to receive unwound film proceeding from the unwind element and adapted to flame treat the first side of the flexible LDPE film; and
a plasma treatment element disposed to receive LDPE film proceeding from the flame treatment element and adapted to treat the first side of the flexible LDPE film with an Argon plasma, wherein the plasma treatment presents between 10.76 and 215.278 Watts/m²/min (between 1 and 20 Watts/ft(2)/min) to the film moving 200 m/min, and wherein the Argon plasma comprises 80% Argon (Ar) and 20% oxygen (O₂).

### BRIEF DESCRIPTION OF THE DRAWINGS

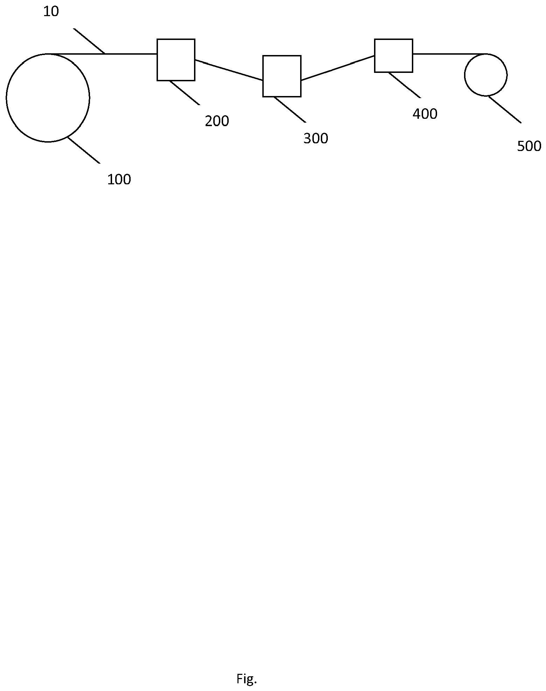

The figure schematically illustrates a side view of a system according to one embodiment of the invention.

### DETAILED DESCRIPTION OF THE INVENTION

As used herein, the term "thin film" designates a film having a caliper that is suitable for use in packages such as bags and pouches for consumer goods as well as part of consumer goods themselves, such as, for example, film calipers from about 10 to about 250 microns. Thin films areLow Density Polyethylene LDPE films. Thin films may be manufactured using blown film, cast film, and extrusion base processes.

In one embodiment the film may comprise an 80 micron sandwich consisting of a 30 micron polyethylene layer laminated to a 50 micron polyethylene layer.

The laminates and monolayer films of the present invention are particularly suitable for adapting to consumer needs for an attractive package. For example the package may be given visual features, including printing effects, metallization effects, and holographic effects.

Printing effects are enhanced in the present invention by printing inks onto surfaces which have been treated by surface oxidation and/or chemical reaction, for example by flame and plasma treatment. The combination of flame treatment and plasma treatment may raise the surface energy of a polyethylene laminate structure from a starting point of about 30 Dyne/cm into the range of between about 35 Dyne/cm to about 55 Dyne/cm. The initial flame treatment step cleanses the surface from contaminants such as slip agents present on the film surface, and reduces the necessary Plasma treatment energy [Watt Density] by a factor of 5-10. This provides a more economical means for effectively printing inks onto the polypropylene surface than alternative, known means, such as applying a chemical treatment, such as an acrylic coating, to the polypropylene. Standard printing techniques including gravure printing, flexographic printing or lithographic (offset) printing, may be used. Reverse printing may also be used to provide a printed layer which is on the side of the film which contacts the non- aqueous adhesive layer.

Metallization effects can be achieved by sublimating aluminum under vacuum and depositing it onto the substrate resulting in a metalized layer. The metalized layer being preferably applied to the side of the plastic film that comes into contact with the non-aqueous adhesive layer. Vacuum deposition is one process to achieve such effects. The metalized layer is visible through parts of the film which are not printed, or only partly printed or printed with a non-opaque ink.

Optical effects may be imparted to the surface of a flexible film by applying a varnish to the film and subsequently curing the varnish in the presence of a master mold structure. The varnish may be cured using varnish specific curing radiation. The cured varnish conforms to the structure of the master mold. The mold may be configured such that the physical dimensions of the structures of the mold are in the nanometer range and thereby impart optical features to the cured varnish. The cured varnish having nanometer scale surface features will interact with impinging electromagnetic radiation in the portion of the spectrum visible to the human eye yielding predetermined optical effects. Raising the surface energy of the film using the methods described herein provides improved varnish adhesion without the need for the application of a primer to the film prior to the application of the varnish.

The systems and methods of the invention may be used to activate at least a portion of the film in preparation for subsequent laminating or constructive builds upon the film. In one embodiment, the outer surface of a PE laminate may be activated prior to the application of an adhesive and an additional element such as a closure, wherein said closure could be part of a package assembly or could be a fastening element for a disposable personal hygiene article such as a diaper; or, the lamination of additional layers to the structure. In this manner the effectiveness of the adhesive may be enhanced. The enhanced effectiveness due to the activation of the surface may enable the selection of an appropriate adhesive from amongst a broader range of available adhesives or may enable the use of a smaller amount of adhesive per unit area of film.

A flexible film as described above, may be provided in the form of discrete sheets or pieces of film, or in the form of a continuous web of film. The film may be presented as a wound roll of material. The presented film can be described as having a first side and a second side. The dimensions of the presented film are such that the thickness dimension of the web is substantially smaller than the length or breadth of the presented film. The wound roll of film web may be unwound and passed through a converting process including the steps of the disclosed method using web handling equipment for the purposes of unwinding the roll of web, carrying the web and maintaining the desired tension in controlling the moving web through the process steps. The terms "thin film" or "plastic film" or "flexible film" or just "film" are used interchangeably and what is meant herein is any film made essentially from thermoplastic material.

The presented material is flame treated. The web may be moved past a fixed flame treatment element or the flame treatment device may be moved past a fixed web. The flame treatment device may be configured to treat the entirety of the first side of the film or may be configured to treat only a portion of the first side of the film. In one embodiment, a film web moves past a single flame treatment station, comprising a single array of gas burning elements. The station burns a mixture of methane and air in the ratio of 1:10 at a rate of (100 l/min)/(1,000 1 /min), imparting between about 1507 and about 1615 Watts/m²/min (between about 140 and about 150 Watts/ft²/min) to the web moving at a velocity of about 200 m/min.

Subsequent to the flame treating, the first side of the web is exposed to Argon plasma treatment. In one embodiment, the film web passes through an area circumscribed by two rollers disposed tangentially to a web handling roll. In the space defined by the three rolls, the web is exposed to an Argon plasma in the presence of an electric potential. A voltage is applied between an electrode and the web support roll such that molecules in the plasma are driven to impact the film disposed upon the web handling roll. The two tangential rolls serve to define the space occupied by the plasma gas and to assist in controlling the makeup of the gas by limiting the possibility that ambient air will be present in the volume between the electrode and the film. The fluid medium of the plasma may be provided at atmospheric pressure or the fluid may be provided at a pressure exceeding atmospheric pressure.

The plasma fluid comprises about 80% Ar and about 20% O₂.

The plasma treatment presents between about 10.76 and about 215.278 Watts/m²/min (between about 1 and about 20 Watts/ft(2)/min)to the web moving at about 200 m/min. The combination of flame and Plasma reduces the Watt Density to the low end of this range to achieve satisfactory results. The combination of flame and plasma treatments modifies the surface properties of the film such that the suitability of the film with regard to the stability of applied coatings and adhesives is improved. The stability of applied coatings is indicated by the results of the rub resistance and Tape tests. The stability of adhesives is indicated by the measured adhesion force.

As illustrated in the Figure, an unwind element 100 provides film 10 to the process. A flame treatment element 200 flame treats a first side of the provided film. A plasma treatment element 300 plasma treats the first side of the film. An optional decorating element 400 coats or decorates the first side of the film. An optional rewind element 500 winds up the treated and optionally decorated film.

In one embodiment, each of the two sides of a film may be treated using the methods described above. In this embodiment, a first side may be treated and subsequently coated to provide a desired coefficient of friction, and the second side may be treated and coated.

### Examples:

Laminated films each comprising 30 micron polyethylene laminated to 50 micron polyethylene, sandwich printed and untreated on the surface were treated using flame treatment and subsequent plasma treatment. The treated surface was subsequently coated with INX varnish available from the INX International Ink Co., of Schaumburg, IL, which was UV-cured in place. The treated and varnished films were tested for surface energy, coefficient of friction, and varnish rub off resistance. The results of the testing are presented in tables 1 and 2.

**Table1**

| **Option** | **Description** | **Plasma Conditions** | **Line Speed [m/min]** |
|---|---|---|---|
| | | | |
| 1 | **80% Ar + 20%02 (Current Benchmark)** | Gasflow: Ar 35 Ipm; Gas 2- 9 lpm Power: 26.38 W/cm (67 W/in) | 61 |
| 2 | **90% Ar + 10%H2 (pre-mix)** | Gasflow: Ar 45 Ipm; Gas 2 - 0 lpm | 61 |
| | | Power: 26.38 W/cm (67 W/in) | |
| 3 | **80% Ar + 20% CO2** | Gasflow: Ar 36 Ipm; Gas 2 - 9 lpm | 61 |
| | | Power: 26.38 W/cm (67 W/in) | |
| 4 | **80% Ar + 20% air** | Gasflow: Ar 36 Ipm; Gas 2- 9 lpm | 61 |
| | | Power: 26.38 W/cm (67 W/in) | |
| 5 | **50% Ar + 50% air** | Gasflow: Ar 22 Ipm; Gas 2 - 22 lpm | 61 |
| | | Power: 26.38 W/cm (67 W/in) | |
| 6 | **30% Ar + 70% air** | Gasflow: Ar 13.5 Ipm; Gas 2 - 31.5 lpm | 61 |
| | | Power: 26.38 W/cm (67 W/in) | |

**Table 2**

| **Option** | **Watt density [W/ft2/min]** | **Post Dyne** | **1-day Dyne** | **Post CoF** | **1-day CoF** | **Varnish Adhesion* (P&G Tape Test)** | |
|---|---|---|---|---|---|---|---|
| | | | | | | **1-day** | 12-day |
| 1 | 4 | 46 | 46 | 0.878 | 0.599 | Passed | Passed |
| 2 | 4 | 46 | 46 | 0.706 | 0.606 | not tested | |
| 3 | 4 | 48 | 48 | 0.748 | 0.691 | not tested | |
| 4 | 4 | 46 | 46 | 0.805 | 0.655 | Passed | Passed |
| 5 | 4 | 46 | 46 | 0.741 | 0.651 | not tested | |
| 6 | 4 | 46 | 46 | 0.833 | 0.797 | Passed | Passed |

### Test Methods:

### INK ADHESION - TAPE TEST

Purpose: Determine the degree of adhesion of printing inks or varnish to flexible film.
The film is printed with inks and coated with varnish at the film supplier facilities, where a curing period is integrated with this application. The ink adhesion is graded after curing by determining the amount of ink that can be removed when a piece of tape is applied and removed.
Preparation of Materials: A minimum of 3 samples is to be prepared for each specimen, including all colors. Specimen size of 70 x 70 mm, flat surface without ridges, scoring or other irregularities. No contamination.
Tape type: 3M scotch transparent tape, ref. 600 (19mm x 65.84m per roll).
Tape duration: The tape should not to be used for more than 3 months or been exposed
to high temperatures during storage.
Measurement set-up
Tape length: 50 mm
Equipment: Cutter. Calibrated steel ruler.

### Test Procedure:

1. Code the specimens to avoid mix-up. Clearly identify the Machine Direction of the specimen.
2. Condition the specimens at least 24 hours prior to the test at 23°C and 50 % R.H.
3. Determine the ink adhesion in standard atmosphere conditions (23°C, 50 % RH), in MD & CD.
   a. Lay the specimen on a smooth, flat, hard surface.
   b. Apply the tape on ink / varnish with a minimum free tape end of 3 cm, i.e. one per color.
   c. Press the tape firmly onto the substrate.
   d. Let the tape stand for 15 seconds.
   e. Grasp the free end of the tape and pull at 90° angle from the surface.
   f. Examine the tape and the sample for ink transfer.

### Grading Levels:

_ GRADE 4 - No ink transfer from the specimen to the tape at close examination, at a 30 cm distance.
_ GRADE 3 - Slight ink transfer from the specimen to the tape at close examination, at 30 cm distance.
_ GRADE 2 - Slight ink transfer from the specimen to the tape at arm's length.
_ GRADE 1 - Noticeable ink transfer from the specimen to the tape at arm's length.

The accept/reject criteria for each the gradings are in accordance with the Master Specification. Test Report: The Test Report includes the Test Date, the Supplier of film materials, the film material identification, and the test results.

### Interpretation of Results

The specimens tested are for each color evaluated and graded in accordance with the grading pictures attached. If the obtained result lies within two grades, choose the most severe grade (worse than grade x, thus grade y). If doubt about the ink transfer visible on the specimen, evaluate the piece of tape and choose the most severe grade, if lying between two grades.

### SUTHERLAND RUB TEST *** ASTM D-5264

1. Test Method - Reference:
   ASTM D-5264: Standard Practice for Abrasion Resistance of Printed Materials by the Sutherland Rub
   Tester.
2. Purpose:
   This procedure determines the rub and scuff resistance of printed surfaces. The test method determines
   more in detail the abrasion resistance of printed materials, using the Sutherland rub tester (or its equivalent) equipped with full-width rubber pads and using standardized receptors.
   This test method is applicable to packaging materials having applied graphics on a flat substrate.
3. Equipment: Refer to Section 6 of ASTM D-5264.
   _ Sutherland rub tester, e.g. model VMB-58405, with the 4 lbs (ca. 1.8kg) weight
   _ Specimen cutter
   _ Sutherland scoring device
4. Preparation of Materials: Refer to Section 8 of ASTM D-5264.
   The test specimens are to be:
   _ Coded prior to testing.
   _ Flat without scouring, ridges or other surface irregularities.
   _ Cut pieces into MD:
      - Unprinted (white) specimens of 175x50 mm, with grain direction parallel to 50 mm dimension.
      - Printed specimens (fully covered with ink and varnish, if possible) of 150x65 mm, with grain direction parallel to 150 mm dimension.
   _ Avoid fingerprint contact with the test specimens during handling.
   _ For cardboard materials, the white specimen is a white unvarnished clay coated board.
5. Test Procedure: Refer to Section 4 & 10 of ASTM D-5264.
   1. Score the unprinted test specimen with the Sutherland scoring device, to wrap around the 4 lbs Sutherland test weight (for cardboard specimens, clay coated side out; other specimens: white {unprinted} side out).
   2. Cover the bottom plate of the Sutherland rub tester (full area) with the printed test specimen, printed side up and flat.
      Note: Position the printing as such that the weight will move back and forth over all the inks to be tested. It may be necessary to rub the samples in several areas to test all the inks.
   3. Run the test at ambient conditions (23°C, 50 % RH). Pre-condition the specimens minimum 24 hours at these conditions prior to testing.
   4. Start the Sutherland rub tester, setting the automatic switch on the number of rubs specified. Note: In the absence of a specification, the specimen is to be rubbed 50 times, i.e. 25 complete, forth and back, strokes.
   5. The tester stops automatically.
   6. Examine the surface of the printed and the white specimens for ink smear.
   7. Examine the surface of the printed specimen for scuffing and/or balling-up of the varnish.
   8. Grade the specimens.
      Note: When testing wrappers repeat the test with the clay coated board block samples replaced by a wrapper and perform the test wrapper against wrapper, follow then steps 4 to 8.
6. Grading Levels:
   The specimens tested are evaluated and graded in accordance with the gradings below. If the obtained result lies within two grades, choose the most severe grade (worse than grade x, thus grade y).
   _ Grade 4: No change. No ink smear, scuffing and/or balling-up of the varnish.
   _ Grade 3: Slight change. Ink smear, scuffing and/or balling-up of the varnish is only able to be seen with difficulty under close examination.
   _ Grade 2: Noticeable change. Evident ink smear, scuffing and/or balling-up of the varnish under close examination.
   _ Grade 1: Bad change. Considerable ink smear, scuffing or balling-up of the varnish.
      The accept/reject criteria for each of the gradings are in accordance with the Master Specification.
7. Test Report:
   _ Test date.
   _ Supplier of packaging material(s).
   _ Packing material identification (thickness, type, ink, varnish etc.).
   _ Number of strokes.
   _ Amount of ink smear, scuffing and/or balling-up of the varnish.
8. Interpretation of Results:
   _ An ink / varnish, which passes the Sutherland rub test, normally will be satisfactory under normal trade handling conditions.
   _ The factors affecting the rub resistance are:
      - The quality of the scores on the block sample,
      - The age of the printed sample,
      - The flatness of the samples fixed to the block, and the test surface,
      - And, the cleanliness of the sample surface.
   _ Due to rubbing and scuffing, a significant decrease in package appearance and legibility of the pack information can happen.
9. Definitions and Abbreviations: Refer to Section 3 of ASTM D-5264.
   Balling-up: The rolling-up of little particles, probably due to the softening of the varnish during therubbing friction. These particles have a rubbery consistency and a blackish appearance. Scuffing: Scratches of ink and/or varnish without spreading.
   Smear: Spreading of ink, other than scratches.
   Lbs: Pounds
   Kg: Kilogram
   MD: Machine Direction

### DETERMINING FRICTION COEFFICIENT

1. Objective: To determine the kinetic coefficient of friction between two plastic films when these come into contact under certain controlled experimental conditions.
2. Reference documents: Standard ASTM D-1894-95.
3. (C) Equipment and materials:
   - Friction coefficient measuring equipment, preferably Eja Tensile Tester from Thwing Albert Instrument Co.
   - Cutter.
   - Metal rule.
   - Safety glasses and gloves when cutting samples.
4. (C) Test samples and conditions:
   4.1. - Properly identify samples to avoid confusion.
   4.2. - Conditions the test samples at 23 +/- 1°C (73.4 +/- 2°F) y 50 +/- 2% of relative humidity at least 24 hours before conducting test.
   4.3. - Test samples should be flat and free of lines, scratch marks and other irregularities on the surface.
   4.4. - Avoid touching samples with the hands to avoid contaminating them with sweat or grease.
   4.5. - Cut at least 5 samples of each type. The fixed test samples should be 130 mm x 300 mm (A) and the moving test sample, the one attached to the moving block, should be 100 mm x 130 mm (B). The longest dimension of both sample should be the machine direction.
   4.6. - Test samples can be analyzed only once. For additional "COF" readings, use new film sample.
5. (C) Adjustment of equipment and verification of scale:
   Verify that the calibration of the equipment is up to date.
6. (C) Procedure:
   6.1. - Set the test speed at 150 mm/min.
   6.2. - Place the sample A in the metallic platform and fasten it at one end. The sample B must be attached to the sliding block of 200 +/- 5 gr and 63.5 mm x 63.5 mm making sure not to create any ridges or any other alteration of the surface.
   6.3. - Place the sample B on top of sample A.
   6.4. - Fasten the sliding block to the holding device, pulley or other system.
   6.5. - The block should travel a distance of at least 130 mm.
   6.6. - Determine the coefficient of friction (COF) of the requested systems (printed/printed, non-printed/printed, non-printed / non-printed, treated/treated, non-treated/non-treated). Test at least 5 samples for each configuration. For laminated films the treated/treated and non-treated/non-treated COF cannot be measured, since their surfaces do not exist.
   6.7. - Determine the standard deviation and average of all the measurements. The value of the coefficient of friction in the measured area will be the average of all the measurements.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

Further, to the extent that any meaning or definition of a term in this document conflicts with any meaning or definition of the same term in a document, the meaning or definition assigned to that term in this document shall govern.

While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

## Claims

1. A method for treating a flexible Low Density Polyethylene (LDPE) film, the method comprising steps of:
a. providing a flexible LDPE film having a fist side and a second side;
b. flame treating the first side of the LDPE flexible film; and
c. subsequently treating the first side with an Argon plasma, wherein the plasma treatment presents between 10.76 and 215.278 Watts/m²/min (between 1 and 20 Watts/ft²/min) to the film moving 200 m/min, and wherein the Argon plasma comprises 80% Argon (Ar) and 20% oxygen (O₂).

2. The method according to claim 1 further comprising the step of applying an adhesive material to the plasma treated first side.

3. The method according to claim 1 further comprising the steps of:
d. applying a coating to the treated first side; and
e. curing the coating applied to the first side.

4. The method according to claim 3 further comprising the step of printing the treated first side prior to applying the coating.

5. The method according to claim 4 delivering a final dynamic coefficient of friction on the treated and decorated first side of less than 0.25, preferably less than 0.2.

6. A system for treating a flexible Low Density Polyethylene (LDPE) film, the system comprising:
a. an unwind element adapted to unwind a wound roll of flexible LDPE film, the flexible LDPE film having a first side and a second side;
b. a flame treatment element disposed to receive unwound film proceeding from the unwind element and adapted to flame treat the first side of the flexible LDPE film; and
c. a plasma treatment element disposed to receive LDPE film proceeding from the flame treatment element and adapted to treat the first side of the flexible LDPE film with an Argon plasma, wherein the plasma treatment presents between 10.76 and 215.278 Watts/m²/min (between 1 and 20 Watts/ft(2)/min) to the film moving 200 m/min, and wherein the Argon plasma comprises 80% Argon (Ar) and 20% oxygen (O₂).

7. The system according to claim 6 further comprising a rewind element disposed to receive the treated LDPE film and to wind the treated LDPE film into a roll.

8. The system according to claim 6 further comprising a web printing or lamination equipment.

## Patentansprüche

1. Verfahren zum Behandeln einer flexiblen Hochdruckpolyethylen- (LDPE-) Folie, wobei das Verfahren die folgenden Schritte umfasst:
a. Bereitstellen einer flexiblen LDPE-Folie mit einer ersten Seite und einer zweiten Seite;
b. Flammbehandeln der ersten Seite der flexiblen LDPE-Folie; und
c. anschließendes Behandeln der ersten Seite mit einem Argonplasma,
wobei die Plasmabehandlung zwischen 10,76 und 215,278 Watt/m²/min (zwischen 1 und 20 Watt/ft²/min) für die Folie, die sich 200 m/min bewegt, bereitstellt und wobei das Argonplasma 80 % Argon (Ar) und 20 % Sauerstoff (O₂) umfasst.

2. Verfahren nach Anspruch 1, ferner umfassend den Schritt des Auftragens eines Klebstoffmaterials auf die plasmabehandelte erste Seite.

3. Verfahren nach Anspruch 1, ferner umfassend die Schritte:
d. Auftragen einer Beschichtung auf die behandelte erste Seite; und
e. Härten der auf die erste Seite aufgetragenen Beschichtung.

4. Verfahren nach Anspruch 3, ferner umfassend den Schritt des Bedruckens der behandelten ersten Seite vor dem Auftragen der Beschichtung.

5. Verfahren nach Anspruch 4, das einen endgültigen dynamischen Reibungskoeffizienten von weniger als 0,25, vorzugsweise weniger als 0,2 auf der behandelten und dekorierten ersten Seite liefert.

6. System zum Behandeln einer flexiblen Hochdruckpolyethylen- (LDPE-) Folie, wobei das System Folgendes umfasst:
a. ein Abwickelelement, das so angepasst ist, dass es eine gewickelte Rolle aus flexibler LDPE-Folie abwickelt, wobei die flexible LDPE-Folie eine erste Seite und eine zweite Seite aufweist;
b. ein Flammbehandlungselement, das so angeordnet ist, dass es abgewickelte Folie aufnimmt, die von dem Abwickelelement ausgeht, und so angepasst ist, dass es die erste Seite der flexiblen LDPE-Folie flammbehandelt; und
c. ein Plasmabehandlungselement, das so angeordnet ist, dass es eine LDPE-Folie aufnimmt, die von dem Flammbehandlungselement ausgeht, und so angepasst ist, dass es die erste Seite der flexiblen LDPE-Folie mit einem Argonplasma behandelt, wobei die Plasmabehandlung zwischen 10,76 und 215,278 Watt/m²/min (zwischen 1 und 20 Watt/ft(2)/min) für die Folie, die sich 200 m/min bewegt, bereitstellt und wobei das Argonplasma 80 % Argon (Ar) und 20 % Sauerstoff (O₂) umfasst.

7. System nach Anspruch 6, ferner umfassend ein Aufwickelelement, das so angeordnet ist, dass es die behandelte LDPE-Folie aufnimmt und die behandelte LDPE-Folie zu einer Rolle aufwickelt.

8. System nach Anspruch 6, ferner umfassend eine Rollendruck- oder Laminierungseinrichtung.

## Revendications

1. Procédé pour traiter un film souple de polyéthylène basse densité (PEBD), le procédé comprenant les étapes consistant à :
a. fournir un film souple de PEBD ayant un premier côté et un deuxième côté ;
b. traiter à la flamme le premier côté du film souple de PEBD ; et
c. traiter ensuite le premier côté avec un plasma d'argon, dans lequel le traitement au plasma présente entre 10,76 et 215,278 Watts/m²/min (entre 1 et 20 Watts/pied²/min) au film se déplaçant à 200 m/min, et dans lequel le plasma d'argon comprend 80 % d'argon (Ar) et 20 % d'oxygène (O₂).

2. Procédé selon la revendication 1 comprenant en outre l'étape d'application d'un matériau adhésif au premier côté traité par plasma.

3. Procédé selon la revendication 1, comprenant en outre les étapes consistant à :
d. appliquer un revêtement sur le premier côté traité ; et
e. durcir le revêtement appliqué sur le premier côté.

4. Procédé selon la revendication 3 comprenant en outre l'étape d'impression du premier côté traité avant application du revêtement.

5. Procédé selon la revendication 4 délivrant un coefficient de frottement dynamique final sur le premier côté traité et décoré inférieur à 0,25, de préférence inférieur à 0,2.

6. Système de traitement d'un film souple de polyéthylène basse densité (PEBD), le système comprenant :
a. un élément de déroulement conçu pour dérouler un rouleau enroulé de film souple de PEBD, le film souple de PEBD ayant un premier côté et un deuxième côté ;
b. un élément de traitement à la flamme disposé pour recevoir le film déroulé provenant de l'élément de déroulement et conçu pour traiter à la flamme le premier côté du film souple de PEBD ; et
c. un élément de traitement au plasma disposé pour recevoir le film de PEBD provenant de l'élément de traitement à la flamme et conçu pour traiter le premier côté du film souple de PEBD avec un plasma d'argon, dans lequel le traitement au plasma présente entre 10,76 et 215,278 Watts/m²/min (entre 1 et 20 Watts/pied(2)/min) au film se déplaçant à 200 m/min, et dans lequel le plasma d'argon comprend 80 % d'argon (Ar) et 20 % d'oxygène (O₂).

7. Système selon la revendication 6 comprenant en outre un élément de réenroulement disposé pour recevoir le film de PEBD traité et pour enrouler le film de PEBD traité en un rouleau.

8. Système selon la revendication 6 comprenant en outre un équipement d'impression ou stratification de nappe.
